# EUROPÄISCHE PATENTSCHRIFT

(11) **EP 1 417 401 B1**
(45) Veröffentlichungstag und Bekanntmachung des Hinweises auf die Patenterteilung: **30.04.2008**
(21) Anmeldenummer: 02758109.9
(22) Anmeldetag: 20.07.2002
(51) Int. Cl.: F01N 3/20, F01N 3/08, F01N 3/36, F01N 3/025, F01N 3/029

(54) **EINRICHTUNG ZUR THERMISCHEN KONDITIONIERUNG UND ZUFÜHRUNG EINES THERMISCH UND/ODER CHEMISCH AKTIVEN MITTELS IN EINE ABGASREINIGUNGSANLAGE**
DEVICE FOR THERMALLY CONDITIONING AND SUPPLYING A THERMALLY AND/OR CHEMICALLY ACTIVE AGENT TO AN EXHAUST GAS PURIFICATION SYSTEM
SYSTEME DE CONDITIONNEMENT THERMIQUE ET D'ALIMENTATION EN AGENT A ACTIVITE THERMIQUE ET/OU CHIMIQUE DANS UNE INSTALLATION DE PURIFICATION DE GAZ D'ECHAPPEMENT

(30) Priorität: 03.08.2001 DE 10138111
(43) Veröffentlichungstag der Anmeldung: 12.05.2004
(73) Patentinhaber: ROBERT BOSCH GMBH, 70442 Stuttgart (DE)
(72) Erfinder: BAREIS, Marc, 71706 Markgroeningen (DE); HARNDORF, Horst, 34270 Schauenberg (DE)
(86) Internationale Anmeldenummer: PCT/DE2002/002682
(87) Internationale Veröffentlichungsnummer: WO 2003/014541

(56) Entgegenhaltungen:
- EP-A- 0 708 230
- WO-A-01/34950
- WO-A-97/36676
- FR-A- 2 731 746
- GB-A- 2 184 669

## Beschreibung

Die vorliegende Erfindung betrifft eine Einrichtung zur thermischen Konditionierung und Zuführung eines thermisch und/oder chemisch aktiven Mittels in das einer Abgasreinigungsanlage zuzuführende Abgas. Die Erfindung betrifft ferner eine Abgasreinigungsanlage mit einer derartigen Einrichtung.

### Stand der Technik

Bei der Behandlung und Reinigung des Abgasstroms beispielsweise eines Verbrennungsmotors kommen verschiedene bekannte Systeme, wie Speicherkatalysator, DENOX-Katalysator, Rußfilter sowie Oxidationskatalysatoren oder katalytische Brenner zum Einsatz. Speicherkatalysatoren etwa speichern über einen gewissen Zeitraum (ca. zwei Minuten) Stickoxide (NOₓ) aus dem Abgasstrom eines Verbrennungsmotors (Dieselmotor). Der beladene Katalysator muß anschließend für einige Sekunden entleert werden. Die Stickoxide werden dabei zu Stickstoff reduziert und an das Abgas abgegeben. Für diesen Entleer- oder Regenerationsvorgang ist eine reduzierende Umgebung (fettes Gemisch) bei einem herrschenden Luftverhältnis von λ < 1 notwendig.

Ein Luftverhältnis von λ < 1 kann motorintern direkt durch Steuerung der Verbrennung oder motorextern durch Dosierung eines Reduktionsmittels (z.B. Dieselkraftstoff) in das Abgassystem erzeugt werden. Bei nockengetriebenen Einspritzsystemen ist die Herstellung eines fetten Gemisches zur Abgasnachbehandlung nur mit einem motorunabhängigen Verfahren zu realisieren. Aber auch bei Common-Rail-Systemen, die die Möglichkeit einer Nacheinspritzung beinhalten, kann die motorexterne Anreicherung zielführend sein, da es bei einer motorinternen Anreicherung des Abgases mit Kohlenwasserstoffen zu einer teilweisen Voroxidation dieser Bestandteile kommt.

Bei der motorinternen Steuerung der Anreicherung des Abgasstroms mit Dieselkraftstoff als Reduktionsmittel gelingt jedoch nur im unteren Drehzahl-/Lastbereich eine rußarme Verbrennung.

Bei der motorunabhängigen Anreicherung des Abgasstroms mit einem Reduktionsmittel ist es bekannt, dieses über einen Mischer in den Abgasstrom dosiert einzuleiten. Die Regeneration eines Speicherkatalysators kann im Teilstrom erfolgen, wobei 10% des Abgasvolumenstroms angereichert mit dem Reduktionsmittel (Dieselkraftstoff) dem zu entleerenden Speicherkatalysator zugeführt wird. Hier bietet sich ein duales System aus zwei parallel geschalteten Speicherkatalysatoren an, um abwechselnd zu beladen und zu regenerieren. Die Abgasströme zu den beiden Katalysatoren werden über eine Abgasklappe gesteuert.

Um den Sauerstoffüberschuß im Abgas zu reduzieren, kann während der Regeneration Kraftstoff katalytisch verbrannt werden, um Luftverhältnisse von λ < 1,0 zu erzielen.

Die in Abgasreinigungsanlagen enthaltenen Ruß- und Partikelfilter müssen von Zeit zu Zeit freigebrannt werden, um ihren ursprünglichen Wirkungsgrad wieder zu erhalten.

Bei den genannten Abgasbehandlungssystemen ist demnach an verschiedenen Stellen die Zuführung von thermisch und/oder chemisch aktiven Mitteln notwendig. Im Falle der Regeneration von Speicherkatalysatoren wird als Reduktionsmittel in der Regel verdampfter Dieselkraftstoff als thermisch und chemisch aktives Mittel eingesetzt. Die hierbei eingesetzten Verdampfungseinrichtungen sind in der Lage, Dieselkraftstoff dosiert zu verdampfen. Sie unterscheiden sich in der Verdampfungsleistung und dadurch bedingt in ihrer Geometrie.

Es wurde in der EP 0 708 230 vorgeschlagen, als Heizkomponente dieser Verdampfungseinrichtungen Glühstiftkerzen (GSK) einzusetzen. Bei hoher Verdampfungsleistung sind mehrere solche Glühstiftkerzen notwendig. Als Dosierkomponente werden Serien-Einspritzventile verwendet, welche Betriebstemperaturen von bis zu 200°C ausgesetzt werden können.

Glühstiftkerzen werden in der Startphase von Dieselmotoren im Brennraum dazu verwendet, um innerhalb weniger Sekunden bei kaltem Motor die für den Start notwendige Temperatur herzustellen.

Bei der erwähnten Abgasnachbehandlung werden zur Übertragung hoher Verdampfungsleistung auf den dem Abgasstrom zuzuführenden Dieselkraftstoff aufgrund der geringen Wärmeübertragungseffizienz mehrere Glühstiftkerzen benötigt, was wiederum zu großen und schweren Bauteilen führt. Für das Abbrennen von Partikelfiltern sind Glühstiftkerzen auch kaum geeignet.

Bisher werden die GSK im Serieneinsatz im Zylinderkopf eingeschraubt und somit am Gehäuse thermisch nicht über 100°C belastet. Die Dichtungen, die sich im Gehäuse des Bauteils befinden, sind entsprechend ausgelegt. Bei Vollast des Motors können die Abgastemperaturen weit oberhalb 400°C liegen. Da die Verdampfereinheit in den Abgastrakt eingebaut ist, überträgt sich die Abgastemperatur an das Gehäuse der Verdampfereinheit und führt zu einer Schädigung der genannten Dichtungen.

Schließlich kommt es aufgrund der Geometrie der GSK zu einer starken Einschränkung der Freiheitsgrade im Design und bei einer Applikation des Verdampfersystems an unterschiedliche Abgasbehandlungssysteme und Einbauräume zu Einschränkungen und Unmöglichkeiten.

Aufgrund der genannten Nachteile ist es erstrebenswert, für die verschiedenen Systeme bei der Abgasnachbehandlung eine Einrichtung zur thermischen Konditionierung und Zuführung eines thermisch und/oder chemisch aktiven Mittels anzugeben, durch die die genannten Glühstiftkerzen ersetzt und die resultierenden genannten Nachteile vermieden werden können.

### Vorteile der Erfindung

Die Einrichtung zur thermischen Konditionierung und Zuführung eines thermisch und/oder chemisch aktiven Mittels ist erfindungsgemäß zumindest teilweise aus einem Keramikmaterial, insbesondere aus einer Kompositkeramik, aufgebaut. Im beschriebenen Kontext vereinigen keramische Materialien mehrere Vorteile:

Das Bauteilgewicht wird aufgrund der geringeren Dichte von Keramik (gegenüber Stahl) reduziert. Zudem wirkt sich, speziell bei Verdampfungseinrichtungen höherer Leistung der oben beschriebenen Art, das Einsparen mehrerer (in der Regel bis zu drei) Glühstiftkerzen positiv aus.

Die Standzeit/Lebensdauer der Verdampfungseinheit wird erhöht, da Keramiken im angeführten Temperaturbereich ohne Einschränkung nutzbar sind. Durch die Verwendung von Keramiken mit unterschiedlichen Stoffeigenschaften kann die Dosierkomponente einer Verdampfungseinrichtung zusätzlich von der Heizkomponente thermisch isoliert werden. Dies hat positive Auswirkung auf die Lebensdauer der Dosierkomponente.

Ein weiterer Vorteil bei GSK-freien Verdampfungseinrichtungen ist, daß die Wärmeübertragung auf das zugeführte Reduktionsmittel während seiner Zuführung erfolgt, so daß eine hohe Wärmeübertragungseffizienz erreicht wird. Bei Glühstiftkerzen erfolgt die Wärmeübertragung nur von der Spitze der Kerze zum vorüberströmenden Medium. Zudem stellt sich nach längerer Betriebsdauer (mehrere Stunden) eine Ablagerung von Kraftstoffrückständen im Spaltbereich zwischen Glühstiftkerze und Abgasrohr ein. Diese Rückstände müssen durch Freibrennen beseitigt werden. Beim erfindungsgemäß vorgeschlagenen, GSK-freien Verdampfen des Kraftstoffs befindet sich kein Spalt zwischen Heizelement und Gehäuse und die eingebrachte Energie wirkt unmittelbar auf etwaige Kraftstoffrückstände in den Zuführkanälen.

Durch die erfindungsgemäße Einrichtung wird das thermisch und/oder chemisch aktive Mittel (wie Dieselkraftstoff als Reduktionsmittel) vorteilhaft über mehrere von einer zentralen Zuleitung abzweigende Zuführleitungen in den Abgasstrom eingeleitet und dort verteilt. Mit Vorteil erfolgt die Zuführung in (oder gegen) Strömungsrichtung des Abgases, um eine homogene Verteilung zu erreichen.

Die Materialien der erfindungsgemäßen Einrichtung sind zweckmäßigerweise derart gewählt, dass eine Isolierschicht sowie eine Heizschicht vorhanden sind, so dass die Erwärmung des zugeführten Mittels unmittelbar vor Eintrag des Mittels in den Abgasstrom stattfinden kann, während stromaufwärts von der Zufuhröffnung eine thermische Isolierung die übrigen Komponenten (beispielsweise Dosiereinrichtung) vor Überhitzung schützt.

Die Isolierschicht kann beispielsweise aus Zirkonoxid oder Aluminiumoxid bestehen, während die Heizschicht aus Siliziumnitrid, dotiert mit MoSi₂, hergestellt ist.

Die erfindungsgemäße Einrichtung eignet sich nicht nur zur Verdampfung eines Reduktionsmittels wie Dieselkraftstoff bei der oben behandelten Abgasreinigung mittels Katalysatoren, sondern auch bei der regenerativen Abbrennung von Partikelfiltern. Im Rahmen einer Regeneration von Rußfiltern bzw. Partikelfiltern reichert die Einrichtung bzw. Dosiereinrichtung das Abgas vor einem Oxidationskatalysator mit verdampftem Dieselkraftstoff an.

Der Oxidationskatalysator sorgt für die Verbrennung des Kraftstoffs schon bei niedrigen Temperaturen. Nach dem Oxidationskatalysator hat sich das Abgas bis auf die Zündtemperatur des im Partikelfilter befindlichen Rußes erhitzt und startet somit das Abbrennen des Rußes.

Die zumindest teilweise aus Keramik hergestellte Einrichtung kann hinsichtlich des Strömungswiderstands im Abgasstrom optimiert werden. Durch das Anbringen mehrerer Austrittsöffnungen wird eine homogene Verteilung des dem Abgas zugeführten Mittels begünstigt. Beispielsweise wird verdampfter Dieselkraftstoff homogen im Abgasstrom verteilt oder Wärmeenergie homogen auf einen freizubrennenden Filter übertragen.

Schließlich ist die Adaption des Systems an unterschiedliche Abgasanlagen vereinfacht.

Ein erfindungsgemäßer Keramikverdampfer für Dieselkraft-stoff wird sinnvollerweise aus dem Fahrzeugtank mit Kraftstoff versorgt. Für den Aufbau des erforderlichen Druckpotentials an der Dosierkomponente gibt es grundsätzlich zwei Möglichkeiten, nämlich einen Bypass an bereits im Fahrzeug befindlichen Einspritzsystemen oder ein autarkes System mit eigener Kraftstoffpumpe.

Die Erfindung soll im Folgenden anhand weiterer in den Zeichnungen illustrierter Ausführungsbeispiele näher erläutert werden.

### Figuren

Figur 1 zeigt ein Kraftstoff-Dosiersystem zur Abgasnachbehandlung unter Verwendung einer Glühstiftkerze.
Figur 2 zeigt ein Kraftstoff-Dosiersystem zur Abgasnachbehandlung bei einem Noₓ-Speicherkatalysator unter Verwendung von Glühstiftkerzen,
Figur 3 zeigt den prinzipiellen Aufbau zur Abgasnachbehandlung unter Verwendung eines Oxidationskatalysators und eines Partikelfilters und
Figur 4 zeigt die erfindungsgemäße Einrichtung in Anwendung als Kraftstoffverdampfer in einer Abgasleitung.

### Beschreibung der bevorzugten Ausführungsform

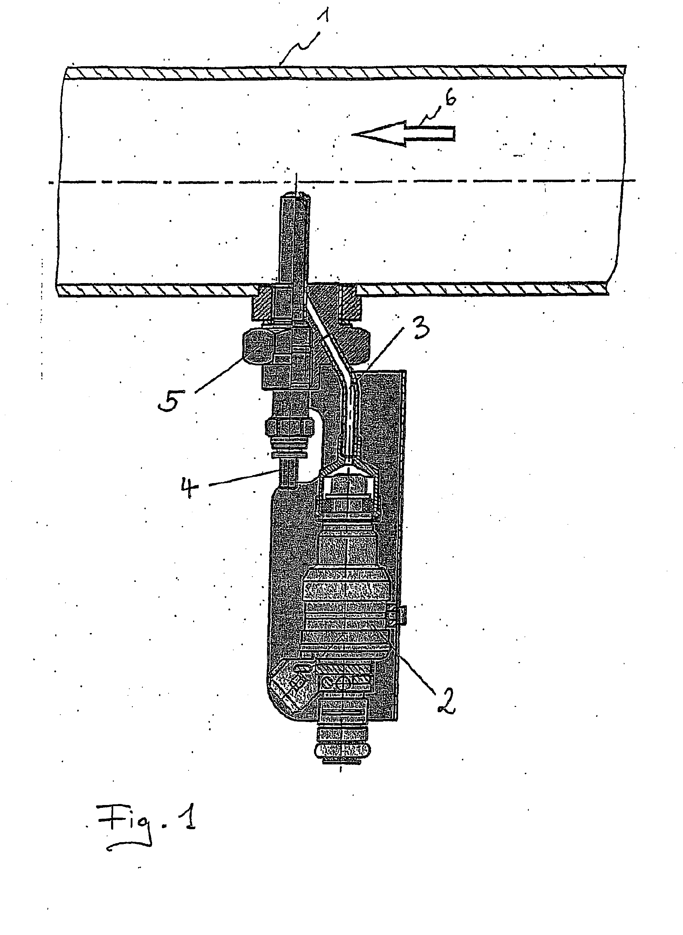

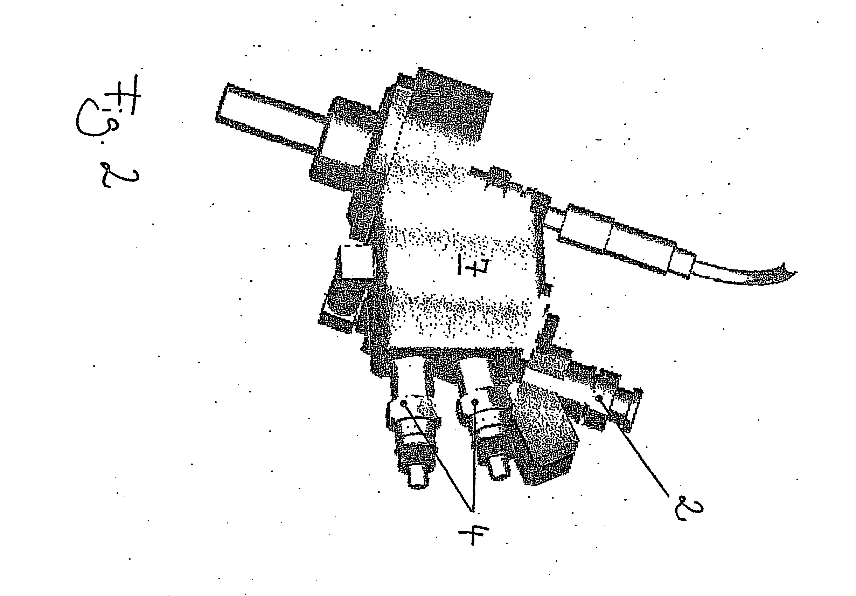

Zunächst seien anhand der Figuren 1 und 2 bisherige Methoden der Kraftstoff-Dosierung zur Abgasnachbehandlung mittels Glühstiftkerzen kurz beschrieben. Dem in der Abgasleitung 1 in Richtung 6 strömenden Abgas wird in diesem Ausführungsbeispiel Dieselkraftstoff als Reduktionsmittel in verdampfter Form zugegeben. Durch diese Maßnahme kann beispielsweise ein nachgeschalteter Speicherkatalysator regeneriert werden, indem die Stickoxide zu Stickstoff reduziert und dem Abgasstrom zugeführt werden. Zur Herstellung einer sauerstoffarmen Umgebung bei einem Luftverhältnis von λ<1 wird Kraftstoff über das Einspritzventil 2 dosiert unter Druck dem Dosiermittel-zulauf 3 zugeleitet. Der flüssige Kraftstoff wird mittels über die Glühstiftkerze 4 erzeugte Wärme verdampft. Eine Glühstiftkerze 4 wandelt elektrische Energie in Wärme um (Glühwendelprinzip) und kann innerhalb weniger Sekunden hohe Temperaturen (über 850°C) erreichen. Die zur Verdampfung notwendige Temperatur beträgt bei Dieselkraftstoff etwa 400°C. Das Gehäuse 5 ist an die Abgasleitung 1 befestigt, der Dosiermittelzulauf 3 wird an der Glühstiftkerze 4 entlanggeleitet, um die Wärme aufnehmen zu können.

In Figur 2 ist ein ähnlicher Aufbau wie in Figur 1 dargestellt. Zwei Glühstiftkerzen 4 sind an eine Kammer angebracht, in die der Dosiermittelzulauf 3 des Einspritzventils 2 mündet. Der zugeführte Kraftstoff wird mittels der über die Glühstiftkerzen 4 zugeführten Wärmeenergie verdampft. Je nach Verdampfungsleistung werden üblicherweise 1 bis 3 Glühstiftkerzen 4 eingesetzt.

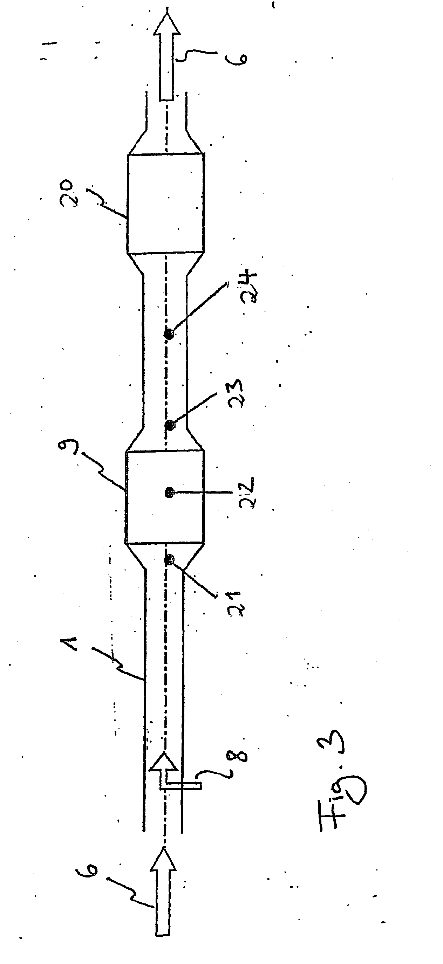

Figur 3 zeigt schematisch einen Aufbau zur Abgasnachbehandlung bei einem Dieselmotor. Dessen Abgase setzen sich hauptsächlich aus Stickstoff, Kohlendioxid und Wasser sowie aus Schadstoffen zusammen, zu denen insbesondere Kohlenmonoxid und unverbrannte Kohlenwasserstoffe, Stickoxide, Bleiverbindungen und Partikel (Ruß) zählen. Durch den Oxidationskatalysator 9 werden nicht vollständig verbrannte Bestandteile, CO sowie HC (Kohlenwasserstoffe), zu Kohlendioxid und Wasser oxidiert. Ein Partikelfilter 20 filtert unverbrannte Partikel, insbesondere Ruß. Die Strömungsrichtung des Abgases in der Abgasleitung 1 ist durch den Pfeil 6 in Figur 3 gegeben. Zur Herabsetzung des Sauerstoffgehalts im Abgas wird über die Kraftstoffzugabeeinrichtung 8 verdampfter Kraftstoff (HC) dem Abgasstrom zugegeben.

Durch Einsatz der erfindungsgemäßen Einrichtung zur Kraftstoffzugabe lassen sich die bereits erwähnten Vorteile, Strömungsoptimierung, homogene Verteilung des verdampften HC, Reduzierung des Bauteilgewichts und eine erhöhte Lebensdauer, realisieren. Insbesondere kann durch die erfindungsgemäße Einrichtung die Menge und die Temperatur des zugeführten verdampften Kraftstoffes einfach, flexibel und genau geregelt werden, wodurch sich wiederum Temperatur und Volumenstrom des Abgases beeinflussen lassen. Zur Regelung dieser Vorgänge sowie zum optimalen Betreiben des Oxidationskatalysators 9 wird dessen Temperatur an verschiedenen Stellen mittels Temperatursensoren 21, 22 und 23 gemessen. Die Konzentration des nicht umgesetzten Kraftstoffes misst das Messgerät 24.

Unverbrannte Partikel wie Ruß werden im Partikelfilter 20 gesammelt. Dieser muss von Zeit zu Zeit freigebrannt werden, um seine ursprüngliche Filtereigenschaft wiederherzustellen. Das Abbrennen des Filters kann ebenfalls mittels einer erfindungsgemäßen Einrichtung zur thermischen Konditionierung und Zuführung eines thermisch aktiven Mittels erfolgen. Beispielsweise werden über die Einrichtung Abgase auf eine hohe Temperatur gebracht und homogen auf die Filteroberfläche gerichtet. Die Abgastemperatur muss zum Freibrennen auf ca. 700°C vor dem Partikelfilter 20 erhöht werden.

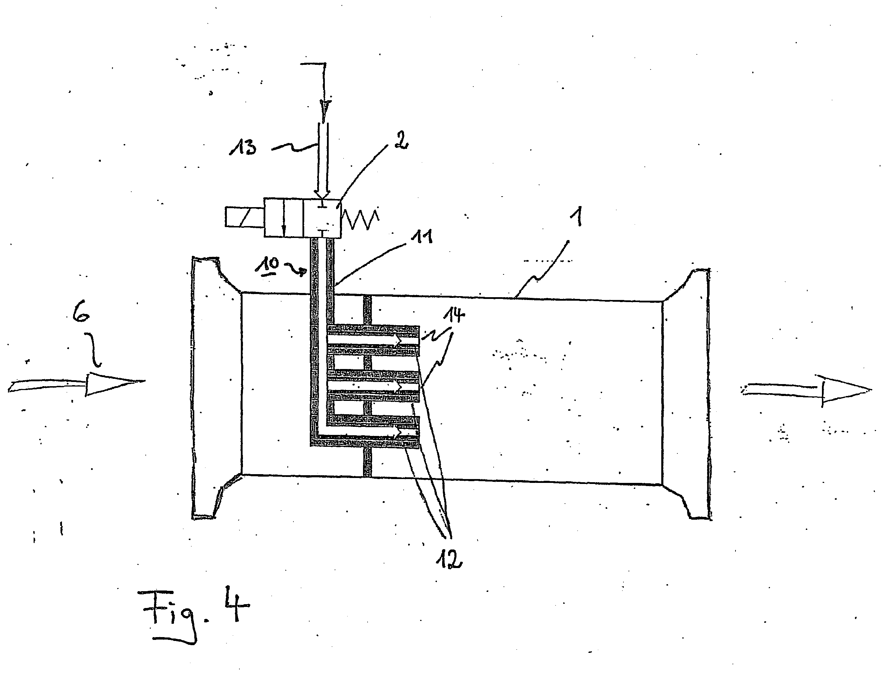

Figur 4 zeigt eine erfindungsgemäße Einrichtung 10 zur Kraftstoffverdampfung, wie sie in einer Abgasleitung 1 angebracht sein kann. Flüssiger Kraftstoff wird über die Leitung 13 einer Dosierkomponente 2 zugeführt. Diese Dosierkomponente kann beispielsweise ein thermisch entkoppeltes Einspritzventil sein. Es schließt sich der erfindungsgemäße Kraftstoffverdampfer 10 an, der als Kompositkeramik aufgebaut ist. Die aus Keramik bestehende Einrichtung 10 ist in eine Isolierschicht 11 und eine Heizschicht 12 unterteilt. Als thermisch und elektrisch isolierende Schicht 11 wird Zirkonoxid oder Aluminiumoxid verwendet. Der Kraftstoff tritt dann in parallel zur Strömungsrichtung 6 des Abgases verlaufende Leitungen, wo er die Heizschicht 12 der Kompositkeramik kontaktiert. Diese Heizschicht basiert auf SiN₄ und ist dotiert mit MoSi₂. Die Heizschicht ist ihrerseits von der thermisch und elektrisch isolierenden Schicht 11 umgeben. Die erfindungsgemäße Einrichtung 10 stellt sicher, dass ein direkter Wärmeübertrag auf den Kraftstoff stattfindet, der bei definiert einstellbarer Temperatur der Heizschicht 12 verdampft. Die thermisch und elektrisch isolierende Schicht 11 schützt die umgebenden Bauteile vor Überhitzung und trägt so zu einer längeren Lebensdauer der gesamten Einrichtung zur Abgasnachbehandlung bei. Die erfindungsgemäße Kraftstoffverdampfereinrichtung 10 kann strömungstechnisch optimiert werden, was beim Einsatz von Glühstiftkerzen nicht möglich ist. Durch Anzahl und Ausrichtung der Austrittsöffnungen 14 der Einrichtung 10 kann eine homogene Verteilung des verdampften Kraftstoffs sichergestellt werden. Auch kann eine gezielte Ausrichtung des aus den Austrittsöffnungen 14 austretenden Mittels (beispielsweise der heißen Abgase beim Freibrennen von Partikelfiltern) vorgenommen werden.

## Patentansprüche

1. Einrichtung zur thermischen Konditionierung und Zuführung eines thermisch und/oder chemisch aktiven Mittels in das einer Abgasreinigungsanlage zuzuführende Abgas,
**dadurch gekennzeichnet,**
**dass** die Einrichtung (10) zur thermischen Konditionierung und Zuführung des thermisch und/oder chemisch aktiven Mittels zumindest teilweise aus einem Keramikmaterial aufgebaut ist, wobei die Einrichtung eine Zuführleitung mit einer Austrittsöffnung (14) aufweist, wobei die als Isolierschicht (11) ausgebildete Wandung der Zuführleitung im Innern mit einer Heizschicht (12) bedeckt ist und sowohl die Wandung als auch die Heizschicht aus Keramikmaterial aufgebaut sind.

2. Einrichtung nach Anspruch 1,
**dadurch gekennzeichnet,**
**dass** die Einrichtung (10) aus einer Kompositkeramik aufgebaut ist.

3. Einrichtung nach Anspruch 1 oder 2,
**dadurch gekennzeichnet,**
**dass** die Isolierschicht aus Zirkonoxid oder Aluminiumoxid besteht.

4. Einrichtung nach Anspruch 1 oder 2,
**dadurch gekennzeichnet,**
**dass** die Heizschicht aus SiN₄, dotiert mit MoSi₂, besteht.

5. Einrichtung nach einem der Ansprüche 1 bis 4,
**dadurch gekennzeichnet,**
**dass** die Einrichtung über mehrere von einer zentralen Zuleitung abzweigende Zuführleitungen mit Austrittsöffnungen (14) verfügt.

6. Einrichtung nach einem der Ansprüche 1 bis 5,
**dadurch gekennzeichnet,**
**dass** die Zuführleitung(en) für das thermisch und/oder chemisch aktive Mittel parallel zur Strömungsrichtung (6) des Abgases gerichtet sind.

7. Abgasreinigungsanlage für Verbrennungsmotoren mit einer Einrichtung gemäß einem der Ansprüche 1 bis 6.

8. Verwendung einer Einrichtung nach einem der Ansprüche 1 bis 6 zur Verdampfung und Zuführung eines Reduktionsmittels wie Dieselkraftstoff in das Abgas eines Verbrennungsmotors, das einer eine Katalysatoranordnung (9) enthaltenden Abgasreinigungsanlage zuzuführen ist.

9. Verwendung einer Einrichtung gemäß einem der Ansprüche 1 bis 6 im Rahmen einer Regeneration wenigstens eines Rußfilters einer Abgasreinigungsanlage.

## Claims

1. Device for thermally conditioning and supplying a thermally and/or chemically active medium into the exhaust gas to be supplied to an exhaust-gas purification system,
**characterized**
**in that** the device (10) for thermally conditioning and supplying the thermally and/or chemically active medium is constructed at least partially from ceramic material, with the device having a supply line with an outlet opening (14), with the wall, which is embodied as an insulating layer (11), of the supply' line being covered in the interior with a heating layer (12), and both the wall and the heating layer being constructed from ceramic material.

2. Device according to Claim 1,
**characterized**
**in that** the device (10) is constructed from a composite ceramic.

3. Device according to Claim 1 or 2,
**characterized**
**in that** the insulating layer is composed of zirconium oxide or aluminium oxide.

4. Device according to Claim 1 or 2,
**characterized**
**in that** the heating layer is composed of SiN₄, doped with MoSi₂.

5. Device according to one of Claims 1 to 4,
**characterized**
**in that** the device has a plurality of supply lines, which branch off from a central feed line, with outlet openings (14).

6. Device according to one of Claims 1 to 5,
**characterized**
**in that** the supply line(s) for the thermally and/or chemically active medium are aligned parallel to the flow direction (6) of the exhaust gas.

7. Exhaust-gas purification system for internal combustion engines having a device according to one of Claims 1 to 6.

8. Use of a device according to one of Claims 1 to 6 for evaporating and supplying a reducing agent such as diesel fuel into the exhaust gas, which is to be supplied to an exhaust-gas purification system which contains a catalytic converter arrangement (9), of an internal combustion engine.

9. Use of a device according to one of Claims 1 to 6 within the context of a regeneration of at least one soot filter of an exhaust-gas purification system.

## Revendications

1. Installation de conditionnement thermique et de fourniture d'un agent à activité thermique et/ou chimique à des gaz d'échappement alimentant une installation de nettoyage des gaz d'échappement,
**caractérisée en ce que**
l'installation (10) de conditionnement thermique et de fourniture de l'agent à activité thermique et/ou chimique est réalisée au moins partiellement en matière céramique,
l'installation comporte une conduite d'alimentation avec un orifice de sortie (14),
la paroi de la conduite d'alimentation en forme de couche isolante (11) est couverte à l'intérieur par une couche de chauffage (12) et à la fois la paroi et aussi la couche de chauffage sont en matière céramique.

2. Installation selon la revendication 1,
**caractérisée en ce que**
l'installation (10) est en céramique composite.

3. Installation selon la revendication 1 ou 2,
**caractérisée en ce que**
la couche isolante est en oxyde de zirconium ou en oxyde d'aluminium.

4. Installation selon l'une des revendications 1 ou 2,
**caractérisée en ce que**
la couche de chauffage est en SiN₄ dopé par MoSi₂.

5. Installation selon l'une des revendications 1 à 4,
**caractérisée en ce qu'**
elle se compose de plusieurs conduites d'alimentation dérivant d'une conduite centrale et ayant des orifices de sortie (14).

6. Installation selon l'une des revendications 1 à 5,
**caractérisée en ce que**
la ou les conduites d'alimentation en agent à activité thermique et/ou chimique sont dirigées parallèlement à la direction d'écoulement (6) des gaz d'échappement.

7. Installation de nettoyage des gaz d'échappement de moteur à combustion interne comportant une installation selon l'une des revendications 1 à 6.

8. Utilisation d'une installation selon l'une des revendications 1 à 6 pour vaporiser et fournir un agent réducteur tel que du gasoil aux gaz d'échappement d'un moteur à combustion interne ayant une installation de nettoyage des gaz d'échappement comportant un dispositif catalyseur (9).

9. Utilisation d'une installation selon l'une des revendications 1 à 6 dans le cas d'une régénération d'au moins un filtre à particules d'une installation de nettoyage des gaz d'échappement.
